# FASCICULE DE BREVET EUROPEEN

(11) **EP 1 141 967 B1**
(45) Date de publication et mention de la délivrance du brevet: **01.03.2006**
(21) Numéro de dépôt: 99961110.6
(22) Date de dépôt: 20.12.1999
(51) Int. Cl.: G21C 3/334

(54) **INSTALLATION DE CHARGEMENT DE CRAYONS DE COMBUSTIBLE DANS UN ASSEMBLAGE DE COMBUSTIBLE NUCLEAIRE**
EINRICHTUNG ZUM BELADEN VON BRENNSTÄBEN IN EIN KERNREAKTORBRENNSTABBÜNDEL
INSTALLATION FOR LOADING FUEL RODS IN A NUCLEAR FUEL ASSEMBLY

(30) Priorité: 22.12.1998 FR 9816218
(43) Date de publication de la demande: 10.10.2001
(73) Titulaire: SOCIETE FRANCO-BELGE DE FABRICATION DE COMBUSTIBLES, 92084 Paris La Défense Cédex (FR)
(72) Inventeur: BOONEN, Franciscus, B-2460 Kasterlee (BE); THIJS, Stijn, B-3910 Neerpelt (BE); ROTH, Claude, F-26290 Donzére (FR); FICHET, Claude, F-26100 Romans (FR)
(74) Mandataire: Jacobson, Claude
(86) Numéro de dépôt international: PCT/FR1999/003202
(87) Numéro de publication internationale: WO 2000/038195

(56) Documents cités:
- EP-A- 0 187 268
- EP-A- 0 361 794
- WO-A-97/01175
- GB-A- 2 266 618
- US-A- 4 649 632
- US-A- 5 251 243
- US-A- 5 699 393

## Description

La présente invention concerne les installations de chargement destinées à constituer des assemblages de combustible nucléaire, par introduction de crayons de combustible dans une ossature.

Les assemblages existants ont des constitutions très différentes les unes des autres. Les assemblages utilisés dans les réacteurs à eau sous pression comportent généralement un squelette constitué de tubes guides reliant un embout inférieur à un embout supérieur et portant des grilles de maintien des crayons de combustible suivant un réseau régulier. Les assemblages combustibles destinés aux réacteurs à eau bouillante ont diverses constitutions. Fréquemment, ils comportent une ossature ayant un tube central reliant deux embouts et portant des grilles légèrement flottantes sur le tube central dans le sens longitudinal. Dans d'autres cas, l'ossature comporte plusieurs tubes de structure longitudinaux reliant deux embouts et affectés chacun à un secteur sensiblement carré occupé par un faisceau de crayons de combustible. D'autres assemblages encore sont à section hexagonale.

On connaît déjà de nombreuses installations de chargement d'assemblage combustible nucléaire ayant une ossature définissant des emplacements parallèles de réception de crayons de combustible répartis en nappes. Une telle installation comprend :
- une structure rigide de réception d'une ossature en position horizontale,
- un magasin de réception des crayons à charger, placés dans une disposition correspondant à celle des crayons dans l'assemblage à charger, et
- un banc de tirage ou de poussée des crayons, généralement nappe par nappe, depuis le magasin jusqu'à l'ossature de réception.

Une installation de ce genre, décrite dans le document FR-A-2 709 202, permet de charger des crayons dans le squelette d'un assemblage combustible destiné à un réacteur à eau sous pression. Cette installation donne des résultats satisfaisants mais elle exige des modifications importantes et un temps d'arrêt notable de l'installation lorsque l'on souhaite passer du chargement d'assemblages d'un type donné au chargement d'assemblages ayant une répartition différente des crayons, par exemple un pas différent et/ou une répartition différente des crayons et des tubes guides dans le réseau.

Cet inconvénient est partagé avec l'ensemble des autres installations existantes de chargement.

La présente invention vise notamment à fournir une installation permettant de charger successivement des lots d'assemblages de combustible destinés à des réacteurs nucléaires à eau légère avec des intervalles courts d'immobilisation de l'installation lorsque l'on souhaite passer de la fabrication d'un type d'assemblage à la fabrication d'un autre type, présentant en conséquence une grande flexibilité d'emploi.

Dans ce but l'invention propose une installation de chargement dans l'assemblage combustible nucléaire, comprenant :
- une structure rigide de réception du squelette en position horizontale,
- un magasin de réception des crayons à charger dans une disposition correspondant à celle des crayons dans l'assemblage,
- un banc de tirage ou de poussée comprenant un bloc d'éléments de tirage ou de poussée permettant de faire coulisser plusieurs crayons à la fois depuis le magasin jusqu'à l'intérieur de l'ossature, caractérisé en ce que le banc de tirage est prévu pour recevoir un bloc de sélection d'éléments de tirage ou de poussée parmi plusieurs blocs, chaque bloc rendant seuls actifs les éléments de tirage ou de poussée correspondant à un jeu de plaques de guidage particulier et en ce que la structure de réception comporte un banc permettant de fixer de façon amovible, par des moyens de montage et démontage rapides, un jeu de brides parmi plusieurs jeux correspondant chacun à un type d'assemblage particulier, à fermeture par vérins. Le magasin de réception comprendra généralement un boîtier muni de rainures de réception de l'un quelconque de plusieurs jeux de plaques de guidage, chaque jeu correspondant à un réseau particulier qui reproduit celui prévu pour l'assemblage . Toutefois, il est également possible de prévoir un type particulier de magasin pour chaque type d'assemblage.

Moyennant le remplacement de quelques composants seulement, il est possible d'adapter la machine à des pas de répartition des crayons différents, à un nombre de crayons différents dans le réseau et/ou à une répartition différente des emplacements inoccupés dans le réseau.

De plus en plus, on utilise des assemblages combustibles dont certains crayons au moins contiennent, en plus de l'oxyde d'uranium, de l'oxyde de plutonium et éventuellement même d'autres transuraniens. De tels crayons de combustible ont une activité neutronique et gamma beaucoup plus élevée que celle des crayons neufs contenant uniquement de l'oxyde d'uranium.

Pour réduire le risque d'exposition d'opérateurs, l'invention propose, à titre optionnel, une installation dans laquelle le magasin de réception, porté par un chariot support, est coiffé par un capot de protection biologique à section droite en forme de U en appui sur la face supérieure du chariot. La structure rigide de réception de l'ossature de l'assemblage peut également être prévue pour recevoir un capot de protection biologique, que l'on constituera fréquemment en plusieurs pièces enlevables séparément. Ainsi les interventions qui peuvent être nécessaires ne se traduisent que par une dose d'exposition réduite.

Pour diminuer encore la nécessité d'intervention d'un opérateur, l'ensemble de la séquence de fonctionnement peut être commandé par un organe central de calcul et de commande programmé, dans lequel peuvent être chargés plusieurs programmes correspondant chacun à un type d'assemblage. Une autre solution consiste à prévoir des actionneurs, tels que des vérins électriques et pneumatiques, commandés à distance.

Dans les deux cas, la présence d'un opérateur à proximité de l'installation ne sera nécessaire que pour effectuer les modifications nécessaires pour passer d'un type de fabrication à un autre. Ces opérations peuvent être faites alors que l'installation ne porte aucun combustible nucléaire.

Les caractéristiques ci-dessus ainsi que d'autres apparaîtront mieux à la lecture de la description qui suit d'un mode particulier de réalisation de l'invention, donné à titre d'exemple non limitatif. La description se réfère aux dessins qui l'accompagnent, dans lesquels :
- la figure 1 est une vue schématique en plan montrant la répartition des dispositifs d'une installation de chargement, depuis l'amenée des crayons de combustible jusqu'à l'évacuation des assemblages ;
- la figure 2 est une vue schématique en élévation d'un banc de tirage appartenant à l'installation de la figure 1 ;
- la figure 3 est une vue en élévation du châssis du banc de tirage de la figure 2 ;
- la figure 4 est une vue en élévation montrant le chariot du banc de tirage de la figure 2 ;
- la figure 5 est une vue de face d'un bloc de sélection de tirants amovibles, destiné à être fixé sur le banc de tirage ;
- la figure 6 est une vue schématique, en élévation, montrant une structure rigide de réception d'ossature d'assemblage, constituée par un banc basculant ;
- la figure 7 est une vue en élévation montrant la poutre du banc basculant de la figure 2 et son mécanisme de basculement ;
- la figure 8 est une vue schématique en élévation, avec des arrachements, destinée à montrer une protection biologique utilisable sur le banc basculant ;
- la figure 9 est une vue de la protection biologique depuis la gauche de la figure 8, avec une coupe partielle suivant la ligne IX-IX de la figure 8 ;
- la figure 10 est une vue en élévation montrant un magasin à capuchons destiné à être placé sur le banc basculant, entre le banc de tirage et l'ossature qui doit recevoir des crayons ;
- la figure 11 est une vue depuis la gauche de la figure 6, montrant des grilles de définition de réseau de crayons d'un assemblage pour réacteur nucléaire à eau bouillante ou REB et des brides permettant de les bloquer ;
- la figure 12, similaire à la figure 11, montre une grille et une bride destinées au chargement d'un assemblage pour réacteur à eau sous pression (REP) ;
- la figure 13 est une vue schématique en élévation, montrant un bras amovible utilisable pour vérifier que le tirage des crayons n'est pas excessif.

L'installation qui sera maintenant décrite présente une constitution générale comparable à celle divulguée dans la demande de brevet français FR-2 690 554 ou le brevet correspondant US 5 317 609 auxquels on pourra se reporter. En conséquence, la description qui suit s'attachera essentiellement aux éléments originaux de l'installation.

L'installation complète peut être constituée d'appareils répartis dans une salle munie de moyens de manutention, tels que des treuils portés par un monorail. L'installation comporte des moyens d'amenée d'ossatures vides, non représentés, ainsi que des moyens d'amenée de bacs contenant des crayons à charger. Ces bacs sont équipés d'une protection biologique lorsque les crayons transportés sont radioactifs, ce qui est notamment le cas des crayons dits MOX contenant des pastilles d'oxydes d'uranium et de plutonium. Les crayons sont transférés dans un chariot dit "chute d'eau" pour y suivre un trajet sinueux, l'un après l'autre. Ce chariot chute d'eau permet d'amener les crayons dans des magasins de réception des crayons suivant une disposition correspondant à celle des crayons dans un assemblage à charger. L'ordre dans lequel les crayons sont amenés au chariot chute d'eau peut être prévu de façon que le magasin de réception reçoive des crayons ayant des natures différentes suivant leur emplacement final dans l'assemblage.

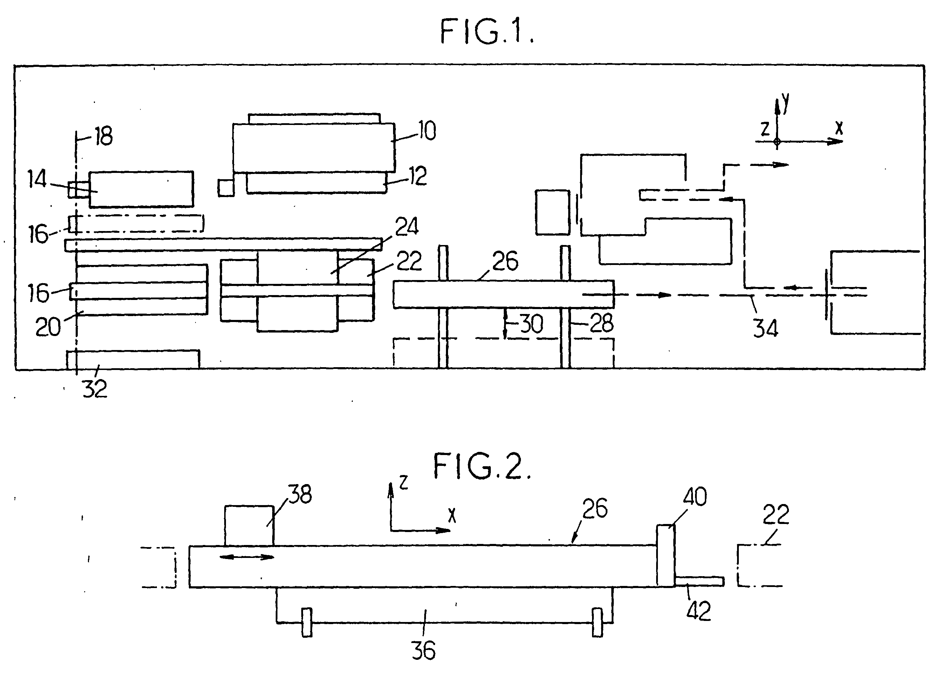

La figure 1 montre l'emplacement du chariot chute d'eau 10, muni d'un.blindage biologique lorsqu'il est destiné à recevoir des crayons MOX, à côté d'une table d'entrée 12 séparée par un emplacement de nettoyage d'une machine 14 d'indexage d'un magasin de réception, chargé en crayons provenant du chariot 10. Dans un mode avantageux de réalisation, le magasin comprend un réceptacle allongé dans lequel sont ménagés plusieurs jeux de couples de rainures. Chaque jeu est destiné à recevoir un jeu de plaques perforées particulier, correspondant à un réseau déterminé des crayons dans l'assemblage à charger.

Un pont roulant, mobile suivant la direction 18, permet d'amener les magasins 16 de la position montrée en traits mixtes à la position montrée en traits pleins, sur un support 20.

L'installation comporte de plus une structure rigide de réception de chaque ossature à son tour, constituée par un banc basculant 22 prévu pour recevoir une protection biologique 24 lorsque l'installation traite des crayons contenant du combustible MOX. Ce banc basculant peut être fixé au sol ou monté sur des rails permettant de l'aligner avec le magasin de réception 16 et avec un banc de tirage 26, déplaçable transversalement sur des rails 28 cui permettent de l'amener dans la position montrée en tirets par déplacement suivant la flèche double 30.

Les ossatures à charger peuvent être amenées sur le banc basculant 22 à l'aide d'un chariot 32.

Enfin, des zones complémentaires permettent les opérations usuelles de contrôle et de nettoyage sur les assemblages complets, que des moyens de levage permettent de transporter en position verticale suivant la direction indiquée par les flèches en tirets 34.

Les appareils essentiels de l'installation seront maintenant successivement décrits.

### Banc de tirage (Figures 2 à 5)

Le banc de tirage 26 est destiné à introduire des crayons, par nappes successives, dans l'ossature d'un assemblage, supportée horizontalement.

Ce banc peut être regardé comme comportant un châssis 36, un chariot 38 déplaçable le long du châssis et un bloc amovible 40 de sélection d'éléments de tirage. Ce bloc est choisi parmi plusieurs blocs correspondant à des répartitions différentes de crayons dans l'assemblage. Le banc 26 peut comporter de plus des bras amovibles de sécurité 42 dont le rôle apparaîtra plus loin.

Le châssis 36 comporte un berceau 44 déplaçable dans la direction y par un moteur 48 entraînant des roues dentées. Le banc de tirage peut ainsi être amené de la position de travail où il est représenté en traits pleins sur la figure 1 à la position de repos indiquée en tirets. Sur le berceau est montée une poutre 50 portant le chariot. Un moteur 52 actionnant des vérins 54 permet de déplacer verticalement la poutre 50 (direction z) pour régler la hauteur d'éléments de tirage 56, constitués par des tiges, et les amener au niveau de chaque nappe de crayons à charger.

Le chariot 38 est monté sur la poutre 50 par l'intermédiaire de coussinets lui permettant de se déplacer le long du banc (direction x). Ces déplacements sont commandés par la rotation d'une vis d'entraînement 58 actionnée par un moteur.

Des éléments de tirage portés par le chariot sont répartis suivant une nappe horizontale complète. Pour permettre la mise en oeuvre de l'invention, les éléments de tirage sont reliés au chariot 38 par des moyens de connexion qui :
- dans le sens du tirage, c'est-à-dire lorsque le chariot tend à tirer des crayons du magasin vers une structure, assurent une liaison positive, par butée mécanique ;
- dans le sens de la poussée, n'effectuent qu'un verrouillage élastique, par exemple à l'aide d'une bille repoussée par un ressort et s'engageant dans un alvéole de l'élément de tirage.

Pour des raisons de sécurité, un capteur d'effort peut être monté entre les éléments de tirage et la butée mécanique de liaison positive, de façon à mesurer la force de tirage.

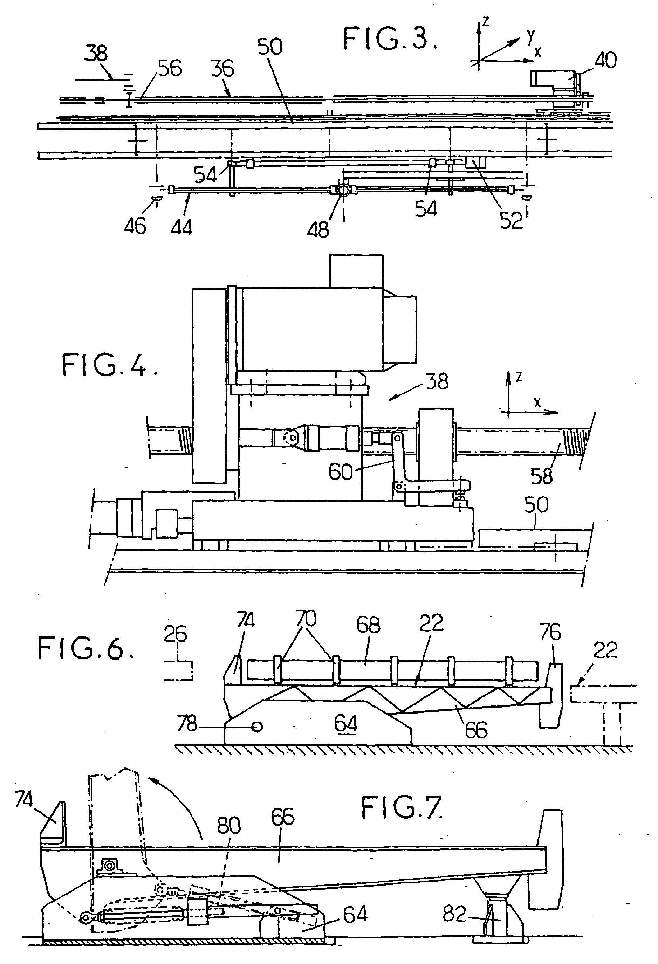

De plus, le chariot est muni d'un mécanisme permettant d'ouvrir et de fermer les pinces terminaies des éléments de tirage. Seul un embiellage mécanique 60 de transmission du mécanisme, qui peut être classique, est représenté sur la figure 4. L'ouverture et la fermeture des pinces peuvent être effectuées par un mécanisme similaire à celui décrit dans le brevet FR-A 2 690 554 ou US 5 317 609 déjà mentionné.

Le bloc 40 de sélection des éléments de tirage (figure 5) comporte une rangée de trous de passage ayant la même disposition que les éléments de tirage. Chaque trou du bloc de sélection est muni d'un opercule escamotable 61 interdisant l'avancée de l'élément de tirage correspondant lorsqu'il est placé en face du trou par un vérin pneumatique tel que 62. Lorsque le chariot se déplace vers le magasin contenant des crayons pour saisir des crayons, ceux des éléments qui sont face à un opercule se désolidarisent temporairement du chariot et s'arrêtent.

Cette disposition est simple à réaliser lorsque tous les assemblages à charger ont un même pas de répartition des crayons, même si les crayons sont remplacés par d'autres éléments à des emplacements différents.

Si au contraire il est prévu de charger des assemblages ayant des pas très différents, on peut être amené soit à prévoir plusieurs moyens de connexion différents, avec des pas appropriés, soit à donner une flexibilité élevée aux éléments de tirage.

### Banc basculant (Figures 6 et 7)

Le banc basculant 22 maintient l'ossature de l'assemblage à charger pendant l'insertion des crayons, puis éventuellement le montage d'embouts inférieur et supérieur et la fixation des tubes guides dans les embouts. Il permet également de faire basculer un assemblage chargé de la position horizontale à la position verticale, afin de permettre sa prise et son transport sans déformation par des moyens de manutention tels qu'un pont roulant.

Le banc basculant 22 peut être regardé comme comprenant un châssis 64 et une poutre basculante 66. Cette poutre est prévue pour recevoir l'ossature 68 de l'assemblage à charger, représentée sur la figure 6 par les grilles 70 et l'enveloppe virtuelle 72 des tirants d'un assemblage de REP. La poutre porte également un magasin à capuchons 74 et un système 76 d'enlèvement de capuchons. Ils peuvent avoir une constitution relativemen classique, et notamment celle décrite dans le document FR-A-2 620 554 ou US 5 317 609 déjà mentionné et sont conçus de façon à être aisément remplaçables suivant la nature de l'assemblage à constituer, par exemple en les fixant par des moyens de serrage à excentrique.

Le châssis 64 sera généralement fixé de façon rigide au sol. Il aura généralement une structure mécano-soudée. La poutre 66 tourne sur le châssis 64 autour d'un axe horizontal 73. Pour minimiser son poids, la poutre est avantageusement constituée par une structure mécano-soudée ou monobloc usinée dont la constitution égalise les contraintes et peut être calculée par éléments finis. Un vérin 80, par exemple électrique, permet de déplacer la poutre 66 de la position horizontale dans laquelle elle est représentée en traits pleins sur la figure 7 à la position verticale montrée en traits mixtes. Lorsque le vérin est allongé et que la poutre est en position horizontale, l'extrémité de la poutre repose sur un support 82, généralement fixé au sol. Lorsque la poutre est en position verticale, elle permet à un treuil non représenté de saisir l'embout supérieur de l'assemblage et de le déplacer avec des contraintes minimales.

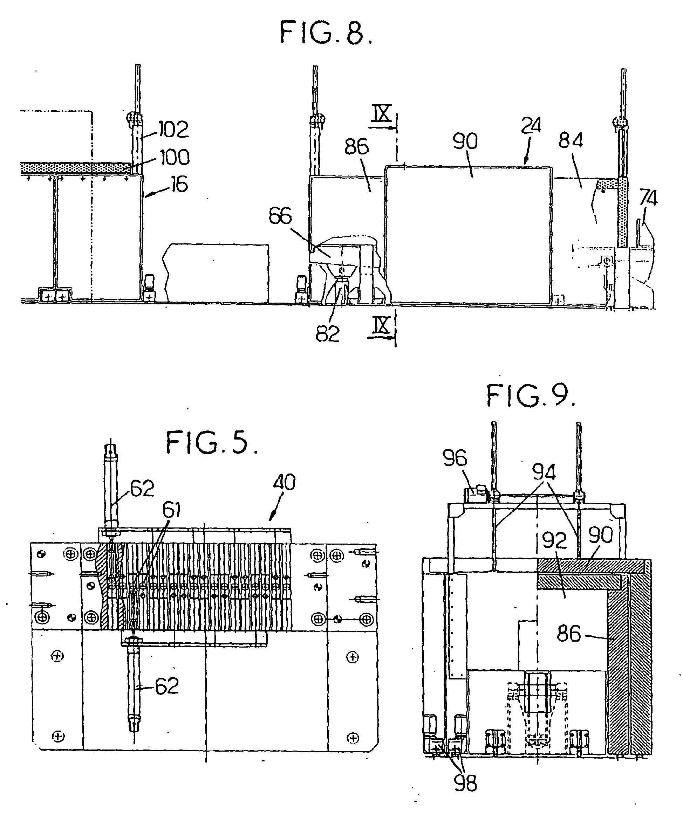

Pour assurer la protection biologique des opérateurs susceptibles d'entrer temporairement dans l'enceinte, le banc basculant 22 est muni d'un capot de protection biologique 24. Afin de faciliter sa manutention et le basculement de la poutre, ce capot est en plusieurs pièces capables de coulisser les unes par rapport aux autres entre la position où elles sont montrées-en figure 8 et où elles sont disposées côte à côte et une position où elles se recouvrent. Dans le mode de réalisation des figures 8 et 9, le capot est composé d'une pièce interne inférieure 84, d'une pièce interne supérieure 86 et d'une pièce extérieure médiane 90. Les pièces internes portent chacune une guillotine 92 de fermeture, suspendue à des tringles 94 déplaçables verticalement par des moteurs 96. Ces pièces peuvent être munies de roues 98 s'appuyant sur des rails placés au sol. Les pièces constitutives du capot de protection peuvent être munies d'anneaux permettant de les soulever au moyen d'un pont roulant.

Le magasin de réception 16 peut lui aussi être coiffé par un capot de protection biologique 100 (figure 8) pouvant être fermé par une guillotine 102.

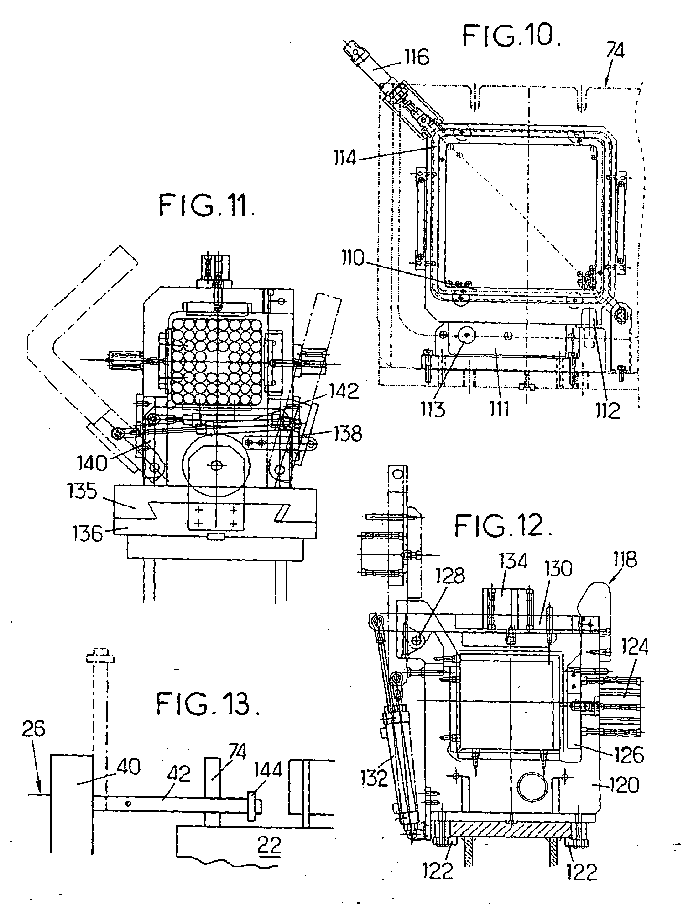

Le magasin à capuchons 74 (figure 10) a une constitution similaire à celle décrite dans le document US-A-5 317 609. Mais un type particulier de magasin est prévu pour chaque type d'assemblage à charger. Il se compose d'un réceptacle 110 présentant un fond percé de passages répartis suivant le réseau des crayons à charger et destinés à recevoir des capuchons. Pour permettre un démontage rapide, ce réceptacle 110 peut comporter un pied 111 qui s'engage dans un socle fixé à la poutre basculante 66 par des vis. Un pion de centrage 112 fixé à la poutre s'engage dans un logement du réceptacle pour garantir un montage précis et une vis de pression 113 retient le réceptacle.

Le réceptacle 110 et une glissière non représentée qui lui est parallèle, emprisonnent une plaque perforée de fermeture 114 qu'un vérin pneumatique 116 permet de déplacer entre une position où elle ferme les passages et une position où elle les ouvre.

Le magasin à capuchons, interposé entre le banc de tirage et l'ossature, a pour fonction d'emboîter sur les tiges des capuchons qui les guident dans les grilles de l'ossature. Les capuchons sont retenus dans le magasin par la plaque de fermeture pendant la mise en place des capuchons sur les tiges de tirage. Dans une position de la plaque, les capuchons sont bloqués et, dans l'autre, les tiges de tirage munies de capuchons peuvent se déplacer librement à travers le magasin.

### Bridage des ossatures sur le banc basculant

### (Figures 11 et 12)

Pour permettre de passer rapidement du chargement d'un type d'assemblage à un autre, le banc basculant est prévu pour que des moyens de bridage différents puissent être rapidement montés ou démontés. Ces moyens de bridage maintiennent l'ossature dans une position précise.

La figure 12 montre une des brides 118, au nombre de huit par exemple, destinées à bloquer un squelette d'assemblage de REP en serrant ses grilles simultanément. Les éléments mobiles de la bride sont montrés en traits pleins dans la position qu'ils occupent lorsque la bride est fermée, en traits mixtes dans la position occupée lorsque la bride est ouverte.

La bride peut être regardée comme comportant une lunette 120 munie de moyens de montage rapide sur la poutre basculante, constitués par exemple par des barrettes 122 s'engageant sous une semelle de la poutre et serrables par des vis. L'un des flancs de la lunette porte un vérin 124 qui actionne un patin latéral 126 destiné à presser la grille contre l'autre flanc de la lunette. Sur cet autre flanc est prévu un axe 128 de basculement d'un couvercle 130 entre une position de fermeture et une position d'ouverture où le couvercle est dans le prolongement du bras de la lunette. Dans cette dernière position, un squelette peut être introduit dans la lunette. Un autre vérin 134, porté par le couvercle 130, permet de presser la grille contre le fond de la lunette et de la centrer exactement dans le sens vertical, comme le fait le vérin 124 dans le sens horizontal.

Les moyens de bridage d'une ossature d'assemblage de réacteur à eau bouillante peuvent avoir la constitution montrée en figure 11.

Pour permettre de placer chaque bride à un emplacement approprié à l'assemblage, la bride est montée sur un coulisseau 135 blocable à l'aide d'un excentrique sur une glissière 136 montée de façon rigide sur la poutre basculante. La bride peut être regardée comme ayant une lunette sur laquelle sont articulés deux bras 138 et 140. Un vérin pneumatique à double effet 142 permet de faire basculer les deux bras entre une position où ils emprisonnent l'ossature et une position (en traits mixtes sur la figure 11) où ils la libèrent. Le bras 138 constitue une paroi latérale d'un espace de réception. Le bras 140 constitue l'autre paroi latérale et le couvercle. Chacun des bras comporte des patins, similaires au patin 126 montré en figure 12, permettant de bloquer l'ossature.

Chaque bras pivotant de chaque bride peut être muni de moyens de verrouillage en position fermée, manoeuvrés par des vérins pneumatiques. Des capteurs permettent de déterminer si la bride est fermée. Des pions peuvent être prévus sur les brides pour retenir l'ossature en position axiale.

Alors que les vérins de toutes les brides peuvent être commandés par un distributeur pneumatique unique dans le cas de la figure 12, il sera en général nécessaire, dans le cas de la figure 11, de prévoir un distributeur individuel pour chaque bride. Pour permettre l'alimentation électrique et/ou pneumatique des vérins et la transmission de signaux fournis par des capteurs de condition de la bride, cette dernière sera généralement munie d'un tronçon de câble terminé par un connecteur de liaison avec un câble général d'alimentation placé sous la poutre. Le châssis 36 peut lui aussi présenter un chemin de câble suivi par des canalisations électriques et/ou pneumatiques de liaison entre des électro-vannes et des vérins de déplacement des éléments de tirage ou de poussée et par une ligne bus de transfert des signaux électriques.

D'autres brides encore que celles montrées sur les figures 11 et 12 peuvent être prévues pour des assemblages d'autre nature et notamment pour des assemblages à section hexagonale.

Le banc de tirage 26 peut être muni de bras amovibles de sécurité 42 pour vérifier, lors du tirage des crayons, que ces crayons ne sont pas tirés trop loin. La figure 13 montre deux bras amovibles 42 montés sur le bloc à opercule 40. Ces bras peuvent être placés soit dans une position horizontale de travail (en traits pleins sur la figure 13) et une position verticale d'escamotage. Les bras amovibles portent un détecteur photo-électrique 144 placé sur le trajet des éléments de tirage et des crayons, à un emplacement intermédiaire entre le magasin à capuchons 74 et l'ossature. Pendant le cycle de tirage, les bras sont placés en position horizontale et fournissent un signal d'alarme si un crayon atteint le champ de vision du détecteur photo-électrique lors d'une opération de tirage.

## Revendications

1. Installation de chargement d'assemblage combustible nucléaire comprenant une ossature définissant des emplacements parallèles de réception de crayons de combustible répartis en nappes, comprenant :
- une structure rigide (22) de réception d'ossature en position horizontale,
- un magasin (16) de réception des crayons à charger dans une disposition correspondant à celle des crayons dans l'assemblage,
- un banc de tirage ou de poussée (26) comprenant un bloc d'éléments de tirage ou de poussée permettant de faire coulisser plusieurs crayons à la fois depuis le magasin jusqu'à l'intérieur de l'ossature,
**caractérisé en ce que** la structure de réception comporte un banc permettant de fixer de façon amovible, par des moyens de montage et démontage rapides, un jeu de brides parmi plusieurs jeux correspondant chacun à un type d'assemblage particulier, à fermeture par vérins, et **en ce que** le banc de tirage (26) est prévu pour recevoir un bloc de sélection d'éléments de tirage ou de poussée parmi plusieurs blocs, chaque bloc ayant une disposition d'éléments de tirage ou de poussée actifs correspondant à une répartition de guidage particulière.

2. Installation selon la revendication 1 destinée à un assemblage combustible dont l'ossature est constituée par un squelette ayant des tubes reliant entre elles des grilles de maintien, **caractérisée en ce que** les brides sont constituées chacune en au moins deux parties dont l'une au moins est commandable par un vérin de façon à bloquer les grilles de l'assemblage contre la structure, lesdits vérins étant commandables simultanément.

3. Installation selon la revendication 1, **caractérisée en ce que** lesdites brides sont commandables indépendamment les unes des autres, et portent des patins destinés à bloquer les grilles d'une ossature en position.

4. Installation selon la revendication 1, 2 ou 3 **caractérisée en ce que** le magasin de réception (16) est porté par un chariot support et coiffé par un capot de protection biologique à section droite en forme de U en appui sur la face supérieure du chariot.

5. Installation selon l'une quelconque des revendications précédentes **caractérisée en ce que** la structure rigide de réception de l'ossature d'assemblage est prévue pour recevoir un capot de protection biologique en plusieurs pièces (84,86,90) capables de coulisser les unes par rapport aux autres entre une disposition où elles sont placées côte à côte et recouvrent l'ensemble d'une ossature et une disposition concentrique dans laquelle elles ont un encombrement longitudinal réduit.

6. Installation selon l'une quelconque des revendications précédentes **caractérisée en ce que** la structure rigide de réception d'assemblage est fixée à une poutre monolithique (66) ayant une section décroissante depuis l'emplacement d'un axe de basculement entre une position horizontale et une position verticale.

7. Installation selon l'une quelconque des revendications précédentes **caractérisée en ce que** chaque élément de tirage est une tige de traction ou de poussée munie d'un vérin de déplacement longitudinal et d'un capteur d'effort.

8. Installation selon la revendication 2 ou 3, **caractérisée en ce que** des glissières longitudinales de fixation de supports de bride dans une position réglable sont prévues sur la structure rigide de réception.

9. Installation selon la revendication 1, 2, 3 ou 8, **caractérisée en ce que** chaque bride est munie de patins de serrage d'une grille d'ossature, actionnés par vérin.

10. Installation selon l'une quelconque des revendications précédentes, **caractérisée en ce que** le banc de tirage ou de poussée est prévu pour recevoir à volonté l'un de plusieurs jeux d'éléments de sélection des éléments de tirage ou de poussée, chaque jeu comprenant :
. un bloc de tirage muni de vérins et de capteurs en nombre égal à celui du nombre d'alvéoles de réception de crayons dans une nappe pour l'assemblage à charger, le dit bloc étant muni d'un câble à connecteur terminal de liaison électrique et pneumatique contenant l'ensemble des conducteurs affectés aux vérins et capteurs,
. un jeu de guides tubulaires destinés à être montés sur le banc, et
. un bloc de sélection placé sur le banc face à la structure support et ayant des trous reproduisant le réseau des alvéoles de réception de crayons dans l'ossature à charger.

11. Installation selon l'une quelconque des revendications précédentes, **caractérisée en ce que** ledit magasin de réception (16) comprend un boîtier muni de moyens de réception de l'un quelconque de plusieurs jeux de plaques de guidage, chaque jeu correspondant à un réseau particulier reproduisant celui prévu pour l'assemblage.

## Patentansprüche

1. Vorrichtung zum Beladen einer Kernbrennstoffkassette, die ein Gerippe bzw. Gestell umfasst, das parallele Aufnahmeplätze für Brennstäbe definiert, die auf Schichten verteilt sind, umfassend:
- eine steife Struktur (22) zur Aufnahme des Gestells in horizontaler Position,
- ein Aufnahmemagazin (16) der zu ladenden Brennstäbe in einer Anordnung die derjenigen der Brennstäbe in der Kassette entspricht,
- eine Zug- oder Schubbank (26) mit einem Zug- oder Schubelemente-Block, der ermöglicht, mehrere Brennstäbe gleichzeitig aus dem Magazin ins Innere des Gestells gleiten zu lassen,
**dadurch gekennzeichnet, dass** die Aufnahmestruktur eine Bank umfasst, die durch Schnellmontage- und -demontageeinrichtungen ermöglicht, einen von mehreren Sätzen von Flanschen mit Zylinderverschluss lösbar zu befestigen, von denen jeder einem speziellen Kassettentyp entspricht, und **dadurch**, dass die Zugbank (26) dazu vorgesehen ist, einen von mehreren Zug- oder Schubelemente-Selektionsblöcken aufzunehmen, wobei jeder Block eine Anordnung von aktiven Zug- oder Schubelementen hat, die einer speziellen Führungsverteilung entsprechen.

2. Vorrichtung nach Anspruch 1, bestimmt für eine Brennstoffkassette, deren Gestell durch ein Gerippe aus Rohren und Haltegittem gebildet wird, **dadurch gekennzeichnet, dass** jeder der Flansche durch wenigstens zwei Teile gebildet wird, von denen wenigstens einer durch einen Zylinder gesteuert werden kann, um die Gitter der Kassette auf der Struktur zu blockieren bzw. zu arretieren, wobei die genannten Zylinder simultan steuerbar sind.

3. Vorrichtung nach Anspruch 1, **dadurch gekennzeichnet, dass** die genannten Flansche unabhängig voneinander steuerbar sind und Klemmschuhe umfassen, die dazu dienen, die Gitter eines in Position befindlichen Gestells zu blockieren.

4. Vorrichtung nach Anspruch 1, 2 oder 3, **dadurch gekennzeichnet, dass** das Aufnahmemagazin (16) durch einen Trägerwagen getragen wird und mit einer U-förmigen biologischen Schutzhaube mit rechteckigem Querschnitt abgedeckt ist, die sich auf der Oberseite des Wagens abstützt.

5. Vorrichtung nach einem der vorangehenden Ansprüche, **dadurch gekennzeichnet, dass** die steife Aufnahmestruktur des Kassettengestells vorgesehen ist, eine biologische Schutzhaube aus mehreren Teilen (84, 86, 90) zu erhalten, die gegenseitig verschoben werden können zwischen einer Anordnung, wo sie Seite an Seite das gesamte Gestell abdecken, und einer konzentrischen Anordnung, bei der ihre Längsausdehnung klein bzw. minimal ist.

6. Vorrichtung nach einem der vorangehenden Ansprüche, **dadurch gekennzeichnet, dass** die steife Kassettenaufnahmestruktur an einem einteiligen Träger (66) befestigt wird, dessen Querschnitt ab der Achse der Kippbewegung zwischen einer horizontalen Position und einer vertikalen Position abnimmt.

7. Vorrichtung nach einem der vorangehenden Ansprüche, **dadurch gekennzeichnet, dass** jedes Zugelement eine Zug- oder Schubstange ist, ausgestattet mit einem Längsverschiebungszylinder und einem Kraftsensor.

8. Vorrichtung nach Anspruch 2 oder 3, **dadurch gekennzeichnet, dass** in der steifen Aufnahmestruktur Längsgleitführungen zur Befestigung von Flanschstützen in einer einstellbaren Position vorgesehen sind.

9. Vorrichtung nach Anspruch 1, 2, 3 oder 8, **dadurch gekennzeichnet, dass** jeder Flansch mit zylinderbetätigten Schuhen zum Klemmen eines Gestellgitters ausgerüstet ist.

10. Vorrichtung nach einem der vorangehenden Ansprüche, **dadurch gekennzeichnet, dass** die Zug- oder Schubbank vorgesehen ist zur beliebigen Aufnahme von einem oder mehreren Sätzen von Selektionselementen der Zug- oder Schubelemente, von denen jedes umfasst:
- einen Zugblock, ausgerüstet mit ebenso vielen Zylindern und Sensoren wie der zu beladende Kassettentyp Aufnahmeplätze für eine Schicht von Brennstabschicht aufweist,
wobei der genannte Block ein Kabel mit elektrischer und pneumatischer Endsteckverbindung umfasst, das alle den Zylindern und Sensoren zugeordneten Leitungen enthält,
- einen Satz rohrförmiger Leiter, dazu bestimmt auf die Bank montiert zu werden, und
- einen Selektionsblock, angeordnet auf der Bank gegenüber der Trägerstruktur und mit Löchern, die das Gitter der Stabaufnahmeplätze in dem zu beladenden Gestell reproduzieren.

11. Vorrichtung nach einem der vorangehenden Ansprüche, **dadurch gekennzeichnet, dass** das genannte Aufnahmemagazin (16) ein Gehäuse umfasst, das mit Aufnahmeeinrichtungen für einen von mehreren Führungsplattensätzen versehen ist, wobei jeder Satz einem speziellen Raster bzw. Gitter entspricht, welches das für die Kassette vorgesehene reproduziert.

## Claims

1. Installation for loading nuclear fuel assemblies comprising a frame defining parallel locations for receiving fuel rods arranged in layers, comprising:
- a rigid structure (22) for receiving frames in a horizontal position,
- a magazine (16) for receiving rods to be loaded in an arrangement corresponding to that of the rods in the assembly, and
- a pull or push bench (26) comprising a block of pull or push members for sliding a plurality of rods at a time from the magazine to the interior of the frame,
**characterised in that** the receiving structure includes a bench for removably fixing, by means that are quick to mount and to demount, one of a plurality of sets of clamps each corresponding to particular type of assembly, closed by actuators, and **in that** the drawing bench (26) is adapted to receive one of a plurality of blocks for selecting pull or push members, each block having an arrangement of active pull or push members corresponding to a particular guide arrangement.

2. Installation according to claim 1 intended for a fuel assembly the frame whereof consists of a skeleton having tubes interconnecting retaining grids, **characterised in that** the clamps each comprise at least two parts of which at least one can be operated by an actuator to lock the grids of the assembly to the structure, said actuators being operable simultaneously.

3. Installation according to claim 1, **characterised in that** said clamps can be operated independently of each other and carry shoes adapted to lock the grids of a frame in position.

4. Installation according to claim 1, claim 2 or claim 3, **characterised in that** the receiver magazine (16) is carried by a support carriage and capped by a U-section biological protection cap bearing on the upper face of the carriage.

5. Installation according to any one of the preceding claims, **characterised in that** the rigid structure for receiving the assembly frame is adapted to receive a biological protection cap made up of a plurality of parts (84, 86, 90) able to slide relative to each other between an arrangement in which they are placed side by side and cover the whole of a frame and a concentric arrangement in which they have a small overall longitudinal size.

6. Installation according to any one of the preceding claims, **characterised in that** the rigid assembly receiving structure is fixed to a one-piece beam (66) having a cross-section decreasing from the location of an axis about which it tilts between a horizontal position and a vertical position.

7. Installation according to any one of the preceding claims, **characterised in that** each pull member is a pull or push rod provided with a longitudinal displacement actuator and a force sensor.

8. Installation according to claim 2 or claim. 3, **characterised in that** the rigid receiving structure includes longitudinal slides for fixing clamp supports in an adjustable position.

9. Installation according to claim 1, claim 2, claim 3 or claim 8, **characterised in that** each clamp includes shoes operated by an actuator for clamping a frame grid.

10. Installation according to any one of the preceding claims, **characterised in that** the pull or push bench is adapted to receive a selected one of a plurality of sets of members for selecting pull or push members, each set comprising:
- a pull block provided with the same number of actuators and sensors as the number of rod-receiving cells in a layer for the assembly to be loaded, said block being provided with a cable terminated with an electrical and pneumatic connector containing all of the actuator and sensor connections,
- a set of tubular guides adapted to be mounted on the bench, and
- a selector block on the bench, facing the support structure and having holes reproducing the array of rod-receiving cells in the frame to be loaded.

11. Installation according to any one of the preceding claims, **characterised in that** said receiving magazine (16) comprises a box provided with means for receiving any of a plurality of sets of guide plates, each set corresponding to a particular array reproducing the intended array of the assembly.
